(19) **Europäisches Patentamt**
**European Patent Office**
**Office européen des brevets**

(11) **EP 4 567 177 A1**

(12) **EUROPEAN PATENT APPLICATION**
published in accordance with Art. 153(4) EPC

(43) Date of publication:
**11.06.2025 Bulletin 2025/24**

(21) Application number: **23845954.9**

(22) Date of filing: **15.05.2023**

(51) International Patent Classification (IPC):
**D04H 3/018** $^{(2012.01)}$    **D04H 3/147** $^{(2012.01)}$
**B60R 21/235** $^{(2006.01)}$

(52) Cooperative Patent Classification (CPC):
**B60R 21/235; D04H 3/018; D04H 3/147**

(86) International application number:
**PCT/JP2023/018069**

(87) International publication number:
**WO 2024/024215 (01.02.2024 Gazette 2024/05)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **29.07.2022 JP 2022121166**

(71) Applicant: **Toray Industries, Inc.**
**Tokyo 103-8666 (JP)**

(72) Inventors:
- **WAKABAYASHI Chinatsu**
  **Otsu-shi, Shiga 520-8558 (JP)**
- **MATSUURA Hiroyuki**
  **Otsu-shi, Shiga 520-8558 (JP)**

(74) Representative: **Mewburn Ellis LLP**
**Aurora Building**
**Counterslip**
**Bristol BS1 6BX (GB)**

(54) **LONG FIBER NONWOVEN FABRIC, AIRBAG PACKAGE INCLUDING SAME, AND METHOD FOR PRODUCING LONG FIBER NONWOVEN FABRIC**

(57)     The present invention relates to a long-fiber nonwoven fabric including fibers containing a thermoplastic resin as a main component, in which the fibers have an average single-fiber diameter of 10.0 $\mu$m to 20.0 $\mu$m, and the long-fiber nonwoven fabric has a cross-sectional porosity of 30% to 80%. Provided is a long-fiber nonwoven fabric having not only excellent flexibility that allows the nonwoven fabric to conform to the device shape of an airbag storage member, but also excellent mechanical strength that prevents breakage or tearing of the nonwoven fabric upon contact with the airbag storage member.

## Description

Technical Field

The present invention relates to a long-fiber nonwoven fabric, an airbag package including the same, and a method of producing a long-fiber nonwoven fabric.

Background Art

An airbag package stores a folded airbag therein, and plays a role in not only preventing the stored airbag from being unintentionally opened or displaced from a stored position, but also protecting the airbag from coming into contact with a member in which the airbag is stored, such as a steering hub (hereinafter, may be simply referred to as "storage member") when installed in a vehicle. Therefore, an airbag package is required to be flexible such that it can conform to the device shape of a storage member, and to have a mechanical strength that prevents breakage or tearing of the airbag package upon contact with the storage member.

A nonwoven fabric is used as such an airbag package in some cases, and several technologies for satisfying both the flexibility and the mechanical strength of a nonwoven fabric have been proposed. For example, Patent Literature 1 proposes an airbag cover characterized by being formed of a cloth that has a tensile strength ratio between the longitudinal direction and the transverse direction in a specific range with the tensile strength in one of the directions being equal to or more than a certain value, and a basis weight in a specific range.

Further, Patent Literature 2 proposes a curtain-shaped airbag-storing wrapping material which is disposed in a vehicle body side portion and expands in a curtain shape to cover the vehicle body side portion when a high load is applied thereto, the wrapping material being characterized in that: it is formed of a thermoplastic synthetic fiber nonwoven fabric; and the nonwoven fabric has a basis weight and an average apparent density in specific ranges, and exhibits a tensile strength, an elongation at break, a tear strength, and a burst strength of equal to or more than certain values in the longitudinal direction, as well as a bending resistance in a certain range.

Citation List

Patent Literature

    [Patent Literature 1] JP 2005-1622A
    [Patent Literature 2] JP 2003-306118A

Summary of Invention

Technical Problem

The technologies proposed in Patent Literature 1 and 2 are nonwoven fabrics that have a high tensile strength in a specific direction and, therefore, exhibit certain mechanical properties and can be stored compactly to some extent. However, when the tensile strength is increased in a specific direction in this manner and the longitudinal-transverse ratio of the strength is consequently increased, a nonwoven fabric is unlikely to conform to the direction of high strength, and thus has poor storability in a storage member. Further, in the direction of low strength, there is a problem that the nonwoven fabric is highly likely to be easily broken or torn upon coming into contact with a storage member.

In view of the above, an object of the present invention is to provide a long-fiber nonwoven fabric having not only excellent flexibility that allows the nonwoven fabric to conform to the device shape of an airbag storage member, but also excellent mechanical strength that prevents breakage or tearing of the nonwoven fabric upon contact with the airbag storage member.

Solution to Problem

In order to solve the above-described problems, the present invention has the following constitution.
    [1] A long-fiber nonwoven fabric, including fibers containing a thermoplastic resin as a main component, wherein

the fibers have an average single-fiber diameter of 10.0 $\mu$m to 20.0 $\mu$m, and
the long-fiber nonwoven fabric has a cross-sectional porosity of 30% to 80%.

[2] The long-fiber nonwoven fabric according to [1], wherein the fibers are composite fibers in which a low-melting-point polymer having a melting point lower than that of a high-melting-point polymer is arranged around the high-melting-point polymer.
[3] The long-fiber nonwoven fabric according to [1] or [2], having a basis weight of 20 g/m$^2$ to 100 g/m$^2$.
[4] The long-fiber nonwoven fabric according to any one of [1] to [3], having a tear strength of 30 N to 120 N in both a longitudinal direction and a cross direction, and a tensile elongation of 10% to 40% in both the longitudinal direction and the cross direction.
[5] An airbag package, including the long-fiber nonwoven fabric according to any one of [1] to [4].
[6] A method of producing the long-fiber nonwoven fabric according to any one of [1] to [4], the method including sequentially performing the following steps (a) to (c):

(a) the step of melt-extruding a thermoplastic resin from a spinning spinneret, and drawing and stretching the thus spun thermoplastic resin by using an ejector to form fibers;
(b) the step of controlling the arrangement of the fibers by using a fiber spreading plate, and depositing the fibers on a moving net conveyer to form fiber webs; and
(c) the step of preheating and then thermally bonding the thus obtained fiber webs.

In the above [4], the "longitudinal direction" of the long-fiber nonwoven fabric refers to a sheet transfer direction (winding direction in a nonwoven fabric roll) in the production of the long-fiber nonwoven fabric, and the "cross direction" of the long-fiber nonwoven fabric refers to a direction perpendicular to the sheet transfer direction (winding direction in a nonwoven fabric roll) in the production of the long-fiber nonwoven fabric.

Advantageous Effects of Invention

The long-fiber nonwoven fabric of the present invention maintains an appropriate density and is excellent in airbag package sewing workability. In addition, the long-fiber nonwoven fabric of the present invention has excellent mechanical strength and is thus excellent in storage workability, without being broken or torn at the time of storing an airbag into an airbag member.

Description of Embodiments

The long-fiber nonwoven fabric of the present invention is a long-fiber nonwoven fabric that includes fibers containing a thermoplastic resin as a main component. The fibers have an average single-fiber diameter of 10 $\mu$m to 20 $\mu$m, and the long-fiber nonwoven fabric has a cross-sectional porosity of 30% to 80%.
The constituents of the present invention will now be described in detail; however, the present invention is not limited to the below-described scope by any means within the gist of the present invention, and various modifications can be made without departing from the gist of the present invention.

[Fibers Containing Thermoplastic Resin as Main Component]

First, the long-fiber nonwoven fabric of the present invention includes fibers containing a thermoplastic resin as a main component. The phrase "containing a thermoplastic resin as a main component" used herein for the fibers according to the present invention means that the ratio of the mass of the thermoplastic resin with respect to a total mass of the fibers is more than 50% by mass. Examples of the thermoplastic resin include polyesters, polyamides, and polyolefins, as well as mixtures and copolymers of these resins. Thereamong, a polyester is preferably used because of its excellent mechanical strength and durability, such as heat resistance, water resistance, and chemical resistance.
The polyester is a high-molecular-weight polymer containing an acid component and a diol component as monomers. In the present invention, as the acid component, for example, an aromatic carboxylic acid such as phthalic acid (ortho form), isophthalic acid, or terephthalic acid, an aliphatic dicarboxylic acid such as adipic acid or sebacic acid, or an alicyclic dicarboxylic acid such as cyclohexane carboxylic acid can be used. As the diol component, for example, ethylene glycol, diethylene glycol, or polyethylene glycol can be used.
Specific examples of the polyester include polyethylene terephthalate (PET), polybutylene terephthalate (PBT), polytrimethylene terephthalate (PTT), polyethylene naphthalate (PEN), polylactic acid (PLA), and polybutylene succinate (PBS). The polyester used as the below-described high-melting-point polymer is most preferably a polyethylene terephthalate (PET) that has not only excellent heat resistance with a higher melting point, but also excellent rigidity.

To these polyester raw materials, additives such as nucleating agents, matting agents, pigments, antifungal agents, antibacterial agents, flame retardants, metal oxides, aliphatic bisamides, alkyl-substitute aliphatic monoamides, and hydrophilic agents may be added within a range that does not impair the effects of the present invention. Among these additives, metal oxides such as titanium oxide have effects of improving the spinnability by reducing the surface friction of the fibers and inhibiting the fusion of the fibers with each other, and improving the fusibility of the long-fiber nonwoven fabric by increasing the thermal conductivity during fusion molding of the long-fiber nonwoven fabric by using hot rolls. Further, aliphatic bisamides such as ethylene bis-stearamide and alkyl-substituted aliphatic monoamides have an effect of enhancing the mold release properties between a hot roll and a nonwoven fabric web and thereby improving the transferability.

The fibers used in the present invention are preferably composite fibers in which a low-melting-point polymer having a melting point lower than that of a high-melting-point polymer is arranged around the high-melting-point polymer. By using composite fibers having such a form, the fibers are likely to be firmly fused with each other in the long-fiber nonwoven fabric, as a result of which fluffing of the surface of the long-fiber nonwoven fabric is inhibited, so that a smooth surface can be easily obtained. In addition to that the fibers constituting the long-fiber nonwoven fabric are firmly fused with each other, the mechanical strength can be improved as well since the number of fusion points between the fibers in the long-fiber nonwoven fabric can be increased as compared to a case of using a mixture of fibers having different melting points.

The difference between the melting point of the high-melting-point polymer and that of the low-melting-point polymer (hereinafter, may be simply referred to as "melting point difference") is preferably 10°C to 140°C. In other words, the low-melting-point polymer preferably has a melting point that is lower than that of the high-melting-point polymer by 10°C to 140°C. By controlling the melting point difference to be preferably 10°C or more, more preferably 20°C or more, still more preferably 30°C or more, the fusibility between the fibers can be improved. Meanwhile, by controlling the melting point difference to be preferably 140°C or less, more preferably 120°C or less, still more preferably 100°C or less, fusion of the low-melting-point polymer component to a hot roll can be inhibited at the time of fusing the fibers together, so that not only fluffing of the surface of the long-fiber nonwoven fabric but also defects occurring on the surface of the long-fiber nonwoven fabric can be reduced.

In the present invention, the melting point of the high-melting-point polymer contained in the composite fibers is preferably in a range of 160°C to 320°C. When the melting point of the high-melting-point polymer contained in the composite fibers is preferably 160°C or higher, more preferably 170°C or higher, still more preferably 180°C or higher, for example, in the case of using the long-fiber nonwoven fabric as an airbag package, the long-fiber nonwoven fabric can exhibit excellent shape stability such that the shape thereof can be maintained even if the long-fiber nonwoven fabric is subjected to a processing where heat is applied thereto. Further, when the melting point of the high-melting-point polymer contained in the composite fibers is 320°C or lower, preferably 300°C or lower, more preferably 280°C or lower, a decrease in productivity due to consumption of a large amount of thermal energy for melting in the production of the long-fiber nonwoven fabric can be inhibited.

Meanwhile, the melting point of the low-melting-point polymer contained in the composite fibers is preferably in a range of 150°C to 310°C, provided that the above-described melting point difference is ensured. When the melting point of the low-melting-point polymer contained in the composite fibers is preferably 150°C or higher, more preferably 160°C or higher, still more preferably 170°C or higher, in the case of using the long-fiber nonwoven fabric as an airbag package, the long-fiber nonwoven fabric can exhibit excellent shape stability such that the shape thereof can be maintained even if the long-fiber nonwoven fabric is subjected to a processing where heat is applied thereto. Further, when the melting point of the low-melting-point polymer contained in the composite fibers is preferably 310°C or lower, more preferably 290°C or lower, still more preferably 270°C or lower, excellent fusibility is obtained in the production of the long-fiber nonwoven fabric, so that a long-fiber nonwoven fabric having excellent mechanical strength can be easily obtained.

In the present invention, the melting point of the thermoplastic resin is defined as a temperature that gives an extreme value in a melting endothermic curve measured using a differential scanning calorimeter ("DSC-2" manufactured by PerkinElmer Co., Ltd., or one having equivalent performance) at a heating rate of 20°C/min in a measurement temperature range of 30°C to 350°C. With regard to a resin whose melting endothermic curve obtained using a differential scanning calorimeter does not show an extreme value, the resin is heated on a hot plate, and the melting point is defined as a temperature at which the resin is melted as observed under a microscope.

When the thermoplastic resin is a polyester, examples of a combination of the high-melting-point polymer and the low-melting-point polymer (hereinafter, may be denoted in the order of high-melting-point polymer/low-melting-point polymer) include PET/PBT, PET/PTT, PET/polylactic acid, and PET/copolymerized PET, among which a combination of PET/copolymerized PET is preferably used because of its excellent spinnability. As a copolymerized component of the copolymerized PET, an isophthalic acid-copolymerized PET is preferably used because of its particularly excellent spinnability.

Examples of a composite form of the composite fibers include a concentric core-sheath type form, an eccentric core-sheath type form, and a sea-island type form, among which a concentric core-sheath type form is preferred since it allows the fibers to be uniformly and firmly fused with each other. Examples of the cross-sectional shape of the composite fibers include a circular cross-section, a flat cross-section, a polygonal cross-section, a multi-lobed cross-section, and a hollow cross-section. Particularly, it is a preferred mode to use composite fibers having a circular cross-section.

In the fibers containing a thermoplastic resin as a main component, the content ratio of the high-melting-point polymer and the low-melting-point polymer is preferably in a range of 90:10 to 60:40, more preferably in a range of 85:15 to 70:30, in terms of mass ratio. By controlling the ratio of the high-melting-point polymer to be 60% by mass to 90% by mass, the long-fiber nonwoven fabric can be provided with excellent durability. Meanwhile, by controlling the ratio of the low-melting-point polymer to be 10% by mass to 40% by mass, the fibers constituting the long-fiber nonwoven fabric are firmly fused with each other, so that the long-fiber nonwoven fabric can be provided with excellent mechanical strength.

The fibers used in the present invention have an average single-fiber diameter of 10.0 $\mu$m to 20.0 $\mu$m. With regard to the range of the average single-fiber diameter, when a lower limit thereof is 10.0 $\mu$m or more, preferably 10.5 $\mu$m or more, more preferably 11.0 $\mu$m or more, the long-fiber nonwoven fabric can be provided with excellent mechanical strength. Meanwhile, with regard to the range of the average single-fiber diameter, when an upper limit thereof is 20.0 $\mu$m or less, preferably 19.0 $\mu$m or less, more preferably 18.0 $\mu$m or less, the uniformity of the long-fiber nonwoven fabric is improved, so that the long-fiber nonwoven fabric can be provided with a dense surface. For example, in the case of performing a post-processing treatment such as flame retardant processing on the long-fiber nonwoven fabric for an airbag package, the coating unevenness of a processing agent can be reduced.

In the present invention, as the average single-fiber diameter ($\mu$m) of the long-fiber nonwoven fabric, a value determined by the following method is adopted.

(i) Ten small samples are randomly collected from the long-fiber nonwoven fabric.
(ii) The surfaces of the thus collected small samples are photographed under a scanning electron microscope (hereinafter, referred to as "SEM"; "VHX-D500" manufactured by KEYENCE Corporation, or one having equivalent performance) at a magnification of ×500 to ×2,000 such that the thickness of each fiber can be measured.
(iii) Ten fibers from each of the thus obtained photographs of the small samples, i.e. a total of 100 fibers, are arbitrarily selected, and the thicknesses of these fibers are measured. The fibers are assumed to have a circular cross-section, and the diameter of each fiber is defined as the thickness of the fiber.
(iv) An arithmetic mean of the thus measured values is calculated and rounded off to one decimal place, and the thus obtained value is defined as the average single-fiber diameter.

[Long-Fiber Nonwoven Fabric]

The long-fiber nonwoven fabric of the present invention includes the above-described fibers containing a thermoplastic resin as a main component. The term "long-fiber nonwoven fabric" used herein refers to a nonwoven fabric produced by the below-described production method, such as a spunbonded nonwoven fabric or a melt-blown nonwoven fabric, and excludes a nonwoven fabric (short-fiber nonwoven fabric) consisting of only fibers cut to a certain length (e.g., 100 mm).

The long-fiber nonwoven fabric of the present invention has a cross-sectional porosity of 30% to 80% at a cross-section. With regard to the range of the cross-sectional porosity, when a lower limit thereof is 30% or more, preferably 33% or more, more preferably 35% or more, the fiber surface is prevented from being in the form of a sheet such as a film, so that the long-fiber nonwoven fabric can be provided with appropriate flexibility. Meanwhile, with regard to the range of the cross-sectional porosity, when an upper limit thereof is 80% or less, preferably 75% or less, more preferably 70% or less, the fibers constituting the long-fiber nonwoven fabric are firmly fused with each other, so that the long-fiber nonwoven fabric can be provided with excellent mechanical strength.

In the present invention, as the value of the cross-sectional porosity (%), a value determined in the following manner is adopted.

(i) From the long-fiber nonwoven fabric, ten small samples allowing observation of a cross-section are collected.
(ii) Cross-sections of the thus collected small samples are photographed under an SEM ("VHX-D500" manufactured by KEYENCE Corporation, or one having equivalent performance) at a magnification of ×1,200.
(iii) The thus obtained photographs of the small samples are each cut out in a size of 50 $\mu$m × 50 $\mu$m.
(iv) The thus cut-out photographs are each converted into a gray-scale image (8-bit image) and binarized by setting the threshold value such that regions having a pixel value of 0 to 127 appear in black while regions having a pixel value of 128 to 255 appear in white.
(v) Using an image analysis software ("ImageJ" or one having equivalent performance), the ratio of black regions with respect to the entirety of each photograph (white regions and black regions) is determined as the cross-sectional porosity.
(vi) The cross-sectional porosity (%) is determined for the ten small samples in the same manner, and an arithmetic mean value (%) of the cross-sectional porosity of the ten small samples is calculated.

(vii) The arithmetic mean value (%) of the cross-sectional porosity of the ten small samples that is obtained in (vi) is rounded off to the nearest whole number, and the thus obtained value is defined as the cross-sectional porosity (%) of the long-fiber nonwoven fabric.

As a means for controlling the cross-sectional porosity of the long-fiber nonwoven fabric to be in the above-described range, for example, as described below, preheating may be performed before thermal bonding, or the average single-fiber diameter of the fibers constituting the long-fiber nonwoven fabric may be adjusted.

The long-fiber nonwoven fabric of the present invention preferably has a basis weight of 20 $g/m^2$ to 100 $g/m^2$. With regard to the range of the basis weight of the long-fiber nonwoven fabric, when a lower limit thereof is preferably 20 $g/m^2$ or more, more preferably 30 $g/m^2$ or more, still more preferably 40 $g/m^2$ or more, the long-fiber nonwoven fabric has excellent mechanical strength. Meanwhile, with regard to the range of the basis weight of the long-fiber nonwoven fabric, when an upper limit thereof is preferably 100 $g/m^2$ or less, more preferably 90 $g/m^2$ or less, still more preferably 80 $g/m^2$ or less, the long-fiber nonwoven fabric is lightweight and has excellent ease of handling.

In the present invention, as the basis weight of the long-fiber nonwoven fabric, a value measured by the following procedure in accordance with "6.2 Mass per unit area" of JIS L1913:2010 "Test methods for nonwovens" is adopted.

(i) Three 25 cm $\times$ 25 cm test pieces are collected per sample width of 1 m.

(ii) The mass (g) of each test piece in a standard state is measured.

(iii) An average of the thus measured values is expressed in terms of mass per 1 $m^2$ ($g/m^2$).

The long-fiber nonwoven fabric of the present invention preferably has a thickness of 0.10 mm to 0.30 mm. By controlling the thickness to be in this range, the long-fiber nonwoven fabric is provided with excellent sewing workability as an airbag package and excellent storability in an airbag member.

In the present invention, as the thickness of the long-fiber nonwoven fabric, a value measured by the following procedure is adopted.

(i) Using a thickness gauge ("TECLOCK" (registered trademark) SM-114 manufactured by TECLOCK Corporation, or one having equivalent performance), the thickness of the long-fiber nonwoven fabric is measured at 10-cm intervals in the cross direction.

(ii) An arithmetic mean of the thus measured values is rounded off to two decimal places, and the thus obtained value is defined as the thickness (mm) of the long-fiber nonwoven fabric.

The long-fiber nonwoven fabric of the present invention preferably has an apparent density of 0.30 $g/cm^3$ to 0.60 $g/cm^3$. With regard to the range of the apparent density, when a lower limit thereof is preferably 0.30 $g/cm^3$ or more, more preferably 0.33 $g/cm^3$ or more, still more preferably 0.35 $g/cm^3$ or more, the long-fiber nonwoven fabric has excellent mechanical strength. Meanwhile, with regard to the range of the apparent density, when an upper limit thereof is preferably 0.60 $g/cm^3$ or less, more preferably 0.55 $g/cm^3$ or less, still more preferably 0.50 $g/cm^3$ or less, the long-fiber nonwoven fabric has appropriate flexibility. In addition, the long-fiber nonwoven fabric has superior workability in sewing it as an airbag package and storing it into an airbag member.

In the present invention, as the apparent density ($g/cm^3$) of the long-fiber nonwoven fabric, a value calculated by the following equation from the basis weight and the thickness of the long-fiber nonwoven fabric that are measured by the above-described respective methods is adopted.

$$\text{Apparent density } (g/cm^3) = \text{Basis weight } (g/m^2)/\text{Thickness } (mm)/1{,}000$$

In the present invention, the long-fiber nonwoven fabric preferably has a tear strength of 30 N to 120 N in both the longitudinal direction and the cross direction. When the longitudinal direction can be determined from the appearance of the long-fiber nonwoven fabric, i.e. when the winding direction of a nonwoven fabric roll can be unambiguously determined, this direction is defined as the longitudinal direction. Meanwhile, when the longitudinal direction cannot be determined from the appearance, e.g. when the long-fiber nonwoven fabric has been cut and is thus not in a rolled state, the longitudinal direction and the cross direction are determined by the following procedure.

(a) One arbitrary direction is specified in a plane of the long-fiber nonwoven fabric, and a test piece of 30 cm in length and 5.0 cm in width is collected along this direction.

(b) Test pieces of 30 cm in length and 5.0 cm in width are collected in the same manner also in the directions rotated by 30°, 60°, and 90° from the above-specified direction.

(c) For the test pieces collected in the respective directions, the tensile strength of each test piece is measured based on the method of measuring the tensile strength of the long-fiber nonwoven fabric as described below in (c-1) to (c-3). As the tensile strength (N/5 cm) of the long-fiber nonwoven fabric of the present invention in each of the longitudinal direction and the cross direction, a value measured in the following manner in accordance with "6.3 Tensile strength and elongation" of JIS L1913:2010 "Test methods for nonwovens" is adopted.

(c-1) From the nonwoven fabric, five 30 cm × 5.0 cm samples are collected at equal intervals in each of the longitudinal direction and the cross direction (e.g., at equal intervals in the longitudinal direction for determination of the cross-direction tensile strength).

(c-2) A load is applied until each sample is cut under the following conditions: chuck distance = 20 cm and tensile speed = 100 ± 10 mm/min.

(c-3) Taking the strength of each sample under maximum load as the tensile strength (N/5 cm), an average of the values measured for the five samples is calculated and rounded off to the nearest whole number, and the thus obtained value is defined as the tensile strength of the long-fiber nonwoven fabric in the longitudinal direction or the cross direction.

(d) A direction having the highest value obtained by the measurement is defined as the longitudinal direction of the long-fiber nonwoven fabric, and a direction perpendicular thereto is defined as the cross direction. In a case where there are two or more directions having the highest value, a direction that is perpendicular thereto and has a lower tensile strength is defined as the longitudinal direction of the long-fiber nonwoven fabric. In a case where there are two or more directions having the highest value and directions perpendicular thereto also have the same tensile strength, e.g., when all four directions have the same tensile strength, any one of the four directions is defined as the longitudinal direction, and a direction perpendicular thereto is defined as the cross direction.

With regard to the range of the tear strength in the longitudinal direction and that in the cross direction, when a lower limit thereof is preferably 30 N or more in both directions, more preferably 40 N or more in both directions, film formation on the nonwoven fabric surface and deterioration of the physical properties due to excessive thermal bonding are inhibited, so that the long-fiber nonwoven fabric has appropriate flexibility. Meanwhile, with regard to the range of the tear strength in the longitudinal direction and that in the cross direction, when an upper limit thereof is preferably 120 N or less in both directions, more preferably 110 N or less in both directions, the fibers constituting the long-fiber nonwoven fabric are moderately thermally bonded to each other, so that the long-fiber nonwoven fabric maintains appropriate mechanical properties.

In the present invention, as the tear strength of the long-fiber nonwoven fabric in each of the longitudinal direction and the cross direction, a value measured in the following manner in accordance with a) Trapezoid Method prescribed in 6.4 "Tear strength" of JIS L1913:2010 "Test methods for nonwovens" using a constant-speed elongation tensile tester ("RTG-1250" manufactured by Baldwin Corporation, or one having equivalent performance) is adopted.

(i) From the long-fiber nonwoven fabric, five 25 cm × 5.0 cm samples are collected at equal intervals in each of the longitudinal direction and the cross direction (e.g., at equal intervals in the longitudinal direction for determination of the cross-direction tear strength).

(ii) An isosceles trapezoidal mark is put on each test piece, and a 1.0-cm incision is made in the center of the short side of this mark at right angle to the short side.

(iii) Each test piece is attached to the chucks of the constant-speed elongation tensile tester along the mark at a chuck distance of 10 cm, with the short side of the trapezoidal mark being tensed and the long side being relaxed.

(iv) A maximum load (N) applied at the time of tearing each test piece with a tensile speed of 100 ± 10 mm/min is measured as the tear strength (N), and an average of the values measured for the five samples is calculated and rounded off to the nearest whole number. The thus obtained value is defined as the tear strength of the long-fiber nonwoven fabric in the longitudinal direction or the cross direction.

As a means for controlling the tear strength of the long-fiber nonwoven fabric to be in the above-described range in both the longitudinal direction and the cross direction, for example, the temperature and the linear pressure during thermal bonding may be adjusted in the below-described manner.

The long-fiber nonwoven fabric of the present invention preferably has a tensile elongation of 10% to 40% in both the longitudinal direction and the cross direction. This allows the long-fiber nonwoven fabric to achieve both satisfactory mechanical strength and appropriate flexibility.

As the tensile elongation (%) of the long-fiber nonwoven fabric in each of the longitudinal direction and the cross direction, a value measured in the following manner in accordance with "6.3 Tensile strength and elongation" of JIS L1913:2010 "Test methods for nonwovens" is adopted.

(i) From the long-fiber nonwoven fabric, five 30 cm × 5.0 cm samples are collected at equal intervals in each of the longitudinal direction and the cross direction (e.g., at equal intervals in the longitudinal direction for determination of the cross-direction tensile elongation).

(ii) A load is applied until each sample is cut under the following conditions:

$$\text{chuck distance} = 20 \text{ cm and tensile speed} = 100 \pm 10 \text{ mm/min}.$$

(iii) The elongation of each sample under maximum load is measured to 1 mm and, from the thus measured elongation, the elongation rate is determined as the tensile elongation (%). An average of the values measured for the five samples is calculated and rounded off to the nearest whole number, and the thus obtained value is defined as the tensile elongation of the long-fiber nonwoven fabric in the longitudinal direction or the cross direction.

As a means for controlling the tensile elongation of the long-fiber nonwoven fabric to be in the above-described range, for example, the temperature and the linear pressure during thermal bonding may be adjusted in the below-described manner.

In the present invention, the long-fiber nonwoven fabric preferably has a surface roughness Rz of 50 $\mu$m or less on both surfaces. By controlling the surface roughness Rz as described above, superior workability is obtained without a sheet folding crease at the time of sewing operation. In addition, the long-fiber nonwoven fabric maintains a mechanical strength such that it is not torn continuously from one spot during airbag storing operation.

The surface roughness Rz ($\mu$m) of the long-fiber nonwoven fabric is determined by the following procedure.

(1) Test pieces of 10 cm $\times$ 10 cm in size are collected from 20 arbitrary spots of the long-fiber nonwoven fabric.
(2) For each test piece, using a surface roughness meter ("SURFTEST SJ-210" manufactured by Mitutoyo Corporation, or one having equivalent performance), a range of 21 mm is measured in accordance with JIS B0610:2001 "Geometrical Product Specification (GPS) - Surface texture: Profile method - Definitions and designation of rolling circle waviness" under the conditions of $\lambda c$ = 2.5 mm, $\lambda s$ = 8 $\mu$m, and measurement speed = 0.5 mm/s with respect to the cross direction of the long-fiber nonwoven fabric to determine the maximum height Rz in units of 0.1 $\mu$m on each surface.
(3) The measurement of (2) is repeated for the respective test pieces to determine an arithmetic mean value ($\mu$m) of the maximum height Rz, and the thus obtained value is rounded off to the nearest whole number and defined as the surface roughness Rz ($\mu$m).

[Method of Producing Long-Fiber Nonwoven Fabric]

A method of producing the long-fiber nonwoven fabric of the present invention will now be described. The long-fiber nonwoven fabric of the present invention is preferably produced by sequentially performing the following steps (a) to (c):

(a) the step of melt-extruding a thermoplastic resin from a spinning spinneret, and drawing and stretching the thus spun thermoplastic resin by using an ejector to form fibers;
(b) the step of controlling the arrangement of the fibers by using a fiber spreading plate, and depositing the fibers on a moving net conveyer to form fiber webs; and
(c) the step of preheating and then thermally bonding the thus obtained fiber webs.

The above-described steps will now each be described in more detail.

(a) Step of Forming Fibers

First, in this step, the above-described thermoplastic resin is melt-extruded from a spinning spinneret. Particularly, when the fibers constituting the long-fiber nonwoven fabric are composite fibers in which a low-melting-point polymer having a melting point lower than that of a high-melting-point polymer is arranged around the high-melting-point polymer, it is preferred that the high-melting-point polymer and the low-melting-point polymer be each melted at a temperature of their respective melting point or higher but (melting point + 70°C) or lower, and melt-extruded from a spinning spinneret having a temperature of the melting point or higher but (melting point + 70°C) or lower such that composite fibers in which the low-melting-point polymer having a melting point lower than that of the high-melting-point polymer by 10°C to 140°C is arranged around the high-melting-point polymer are obtained. The discharge holes of the spinning spinneret from which the molten thermoplastic resin is extruded may have, for example, a circular shape, an elliptical shape, a polygonal shape, a multi-lobed shape, or a combination of these shapes, in accordance with the cross-sectional shape of the fibers. Particularly, from the standpoint of efficiently obtaining bonding points between the resulting fibers and firmly bonding the fibers with each other by thermal compression bonding, it is a more preferred mode to use a spinning spinneret having a circular cross-section.

Subsequently, the thermoplastic resin that has been melt-extruded and spun in the above-described manner is drawn and stretched by using an ejector to form fibers. In this process, the thermoplastic resin is preferably drawn at a spinning speed of 3,000 m/min to 6,000 m/min.

(b) Step of Forming Fiber Webs

In this step, the arrangement of the fibers formed in the above-described step is controlled by using a fiber spreading plate. Specifically, the fibers sucked by an ejector are preferably ejected from a slit-shaped fiber spreading plate arranged in a lower part of the ejector. Subsequently, the fibers are preferably deposited on a moving net conveyer to form fiber webs.

(c) Step of Thermally Bonding Fiber Webs

In the method of producing the long-fiber nonwoven fabric of the present invention, the fiber webs obtained in the above-described step are preheated and then thermally bonded.

First, for the preheating, a means for fusing the collected fiber webs by using a pair of upper and lower flat rolls, or a means for setting a flat roll on the net conveyer and fusing the fiber webs between the net conveyer and the flat roll is preferably employed.

The "flat roll" used in these preheating means refers to a metal roll or an elastic roll that does not have irregularities on the roll surface, and the "pair of upper and lower flat rolls" refers to, for example, a pair of metal rolls, or a pair of a metal roll and an elastic roll. The "elastic roll" refers to a roll composed of a material having an elasticity as compared to a metal roll. Examples of the elastic roll include so-called paper rolls made of paper, cotton, aramid paper, or the like, and resin rolls made of a urethane resin, an epoxy resin, a silicon resin, a polyester resin, a hard rubber, or a mixture thereof.

In the preheating, the temperature of the pair of upper and lower flat rolls (when these rolls are not used, the temperature of the surface of a preheating device brought into contact with the nonwoven webs) is preferably lower by 65°C to 120°C than the melting point of the thermoplastic resin (when the fibers are composite fibers in which a low-melting-point polymer having a melting point lower than that of a high-melting-point polymer is arranged around the high-melting-point polymer, the melting point of the low-melting-point polymer). By controlling the temperature in this manner, the fibers are not excessively fused with each other, so that the transferability of the fibers in the production of the long-fiber nonwoven fabric can be improved.

The linear pressure in the preheating is preferably 40 N/cm to 1,000 N/cm. By controlling the linear pressure for the preheating to be 40 N/cm or higher, the mechanical strength required for conveying the fiber webs to the subsequent step can be provided. Meanwhile, by controlling the linear pressure for the preheating to be 1,000 N/cm or lower, excessive fusion of the fibers can be inhibited.

Subsequently, the preheated fiber webs are subjected to thermal bonding. It is preferred to use a pair of upper and lower flat rolls for this thermal bonding as well. Particularly, it is more preferred to use a pair of metal rolls since this allows the resulting long-fiber nonwoven fabric to have excellent smoothness with little variation in thickness in the widthwise direction. This combination can further improve the uniformity of the thickness and the mechanical properties of the long-fiber nonwoven fabric.

In the thermal bonding, the temperature of the pair of upper and lower flat rolls (when these rolls are not used, the temperature of the surface of a preheating device brought into contact with the nonwoven webs) is preferably lower by 5°C to 60°C than the melting point of the thermoplastic resin (when the fibers are composite fibers in which a low-melting-point polymer having a melting point lower than that of a high-melting-point polymer is arranged around the high-melting-point polymer, the melting point of the low-melting-point polymer). By setting the temperature in this manner, the fibers are prevented from excessively fusing with each other and causing the resulting long-fiber nonwoven fabric to be partially in the form of a film-like sheet. In addition, a decrease in productivity due to fusion of the low-melting-point polymer component to the rolls used in the thermal bonding can be inhibited.

The linear pressure in the thermal bonding is preferably 90 N/cm to 1,000 N/cm. By controlling the linear pressure for the thermal bonding to be 90 N/cm or higher, the long-fiber nonwoven fabric can be provided with excellent mechanical strength. By controlling the linear pressure for the thermal bonding to be 1,000 N/cm or lower, excessive fusion of the fibers can be inhibited.

In the method of producing the long-fiber nonwoven fabric of the present invention, the above-described preheating and thermal bonding may be performed continuously on a single production line, or the fiber webs may be once wound up after the preheating and then wound out to perform the thermal bonding. Particularly, it is a preferred mode to continuously perform the preheating and the thermal bonding on a single production line, since this mode is excellent in productivity.

[Airbag Package]

The airbag package of the present invention includes the above-described long-fiber nonwoven fabric. The airbag package of the present invention preferably includes a flame retardant layer that is arranged on at least one surface of the long-fiber nonwoven fabric. Specifically, the flame retardant layer is preferably arranged on the inner surface and/or the outer surface of the airbag package housing an airbag. By arranging the flame retardant layer, the airbag package can be provided with high flame retardancy, which is an important index for an airbag package.

When arranging the flame retardant layer on the long-fiber nonwoven fabric of the present invention, the mass of the flame retardant layer per unit area of the long-fiber nonwoven fabric is preferably $0.1 \, \text{g/m}^2$ to $5.0 \, \text{g/m}^2$. By controlling the mass of the flame retardant layer per unit area to be $0.1 \, \text{g/m}^2$ or more, preferably $0.2 \, \text{g/m}^2$ or more, an airbag package having appropriate flame retardancy can be obtained. Meanwhile, by controlling the mass of the flame retardant layer per unit area to be $5.0 \, \text{g/m}^2$ or less, preferably $4.0 \, \text{g/m}^2$ or less, deterioration of the mechanical properties due to a sealing effect on the surface of the nonwoven fabric can be inhibited.

When arranging the flame retardant layer, the mass concentration of a flame retardant in a flame retardant solution to be used is preferably 5% to 20%. By controlling the mass concentration of the flame retardant to be in this range, an airbag package having appropriate flame retardancy can be obtained. A solvent used for diluting the flame retardant is not particularly specified; however, by using water, a more environmentally-friendly production method can be achieved. As the flame retardant, for example, a halogen-based, phosphorus-based, or composite-type organic flame retardant, or an inorganic flame retardant such as a metal hydroxide or an antimony-based flame retardant is preferably used.

As a method of arranging the flame retardant layer on the long-fiber nonwoven fabric of the present invention, a method of applying the above-described flame retardant solution by a gravure method, a gravure offset method, a flexo method, a roll coating method, a comma coating method, a knife coating method, or the like is preferably employed.

Further, other additives may be added to the flame retardant solution within a range that does not hinder the object of the present invention. Examples of the additives include water repellents, antistatic agents, and penetrants. These processing agents are mixed in the above-described solvent to be applied to the long-fiber nonwoven fabric.

Examples

The long-fiber nonwoven fabric of the present invention will now be described concretely by way of Examples. However, the present invention is not limited only to the below-described Examples. Unless otherwise specified, physical properties were measured based on the above-described methods.

[Measurement Methods]

(1) Melting Point (°C) of Polyester

Measurement was performed using a differential scanning calorimeter "DSC-2" (manufactured by PerkinElmer Co., Ltd.) at a heating rate of 20°C/min, and a temperature giving an extreme value in the thus obtained melting endothermic curve was defined as the melting point.

(2) Intrinsic Viscosity (IV) of Polyester

As the intrinsic viscosity (IV) of a polyester, 8 g of a sample was dissolved in 100 mL of o-chlorophenol, and the relative viscosity $\eta_r$ was measured at 25°C using an Ostwald viscometer and calculated by the following equation:

$$\eta_r = \eta/\eta_0 = (t \times d)/(t_0 \times d_0)$$

(wherein, $\eta$ represents the viscosity of a polymer solution; $\eta_0$ represents the viscosity of o-chlorophenol; t represents the drop time (sec) of the solution; d represents the density $(\text{g/cm}^3)$ of the solution; $t_0$ represents the drop time (sec) of *o*-chlorophenol; and $d_0$ represents the density $(\text{g/cm}^3)$ of o-chlorophenol).

Subsequently, the intrinsic viscosity (IV) was calculated from the relative viscosity $\eta_r$ by the following equation:

$$\text{Intrinsic viscosity (IV)} = 0.0242\eta_r + 0.2634$$

(3) Average Single-Fiber Diameter (μm)

The average single-fiber diameter of the fibers used in the present invention was determined by the above-described method using an SEM ("VHX-D500" manufactured by KEYENCE Corporation).

(4) Basis Weight ($g/m^2$) of Long-Fiber Nonwoven Fabric

The basis weight of a long-fiber nonwoven fabric was determined by the above-described method.

(5) Thickness (mm) of Long-Fiber Nonwoven Fabric

The thickness of a long-fiber nonwoven fabric was measured using a thickness gauge "TECLOCK" (registered trademark) SM-114 (manufactured by TECLOCK Corporation), and evaluated by the above-described method.

(6) Density ($g/cm^3$) of Long-Fiber Nonwoven Fabric

The density of a long-fiber nonwoven fabric was determined by the above-described method.

(7) Cross-Sectional Porosity (%) of Long-Fiber Nonwoven Fabric

The cross-sectional porosity of a long-fiber nonwoven fabric was determined by the above-described method.

(8) Tear Strength (N) of Long-Fiber Nonwoven Fabric

The tear strength of a long-fiber nonwoven fabric was determined by the above-described method.

(9) Tensile Elongation (%) of Long-Fiber Nonwoven Fabric

The tensile elongation of a long-fiber nonwoven fabric was determined by the above-described method.

(10) Sewing Workability of Long-Fiber Nonwoven Fabric

A long-fiber nonwoven fabric was cut into a rectangular piece of 30 cm in width and 50 cm in length, which was subsequently folded such that the short sides were overlaid with each other to obtain a piece of 30 cm in width and 25 cm in length. Using a #60 nylon sewing thread (manufactured by FUJIX Ltd.), an inner 10-mm portion from the overlaid edge was manually running-stitched at a pitch of 4 mm, and the sewing workability in making a bag shape was evaluated based on work confirmation by twenty healthy male and female individuals in accordance with the following 4-grade criteria of A to D. The most common evaluation was defined as the sewing workability of the long-fiber nonwoven fabric.
A: There was neither breakage of the long-fiber nonwoven fabric, nor thread jamming or threading difficulty due to the hardness of the long-fiber nonwoven fabric.
B: There was no breakage of the long-fiber nonwoven fabric; however, thread jamming and threading difficulty were observed.
C: The long-fiber nonwoven fabric was broken; however, there was no thread jamming or threading difficulty.
D: Breakage of the long-fiber nonwoven fabric was observed along with thread jamming and threading difficultly.

[Resins Used]

The details of the resins used in Examples and Comparative Examples are described below.

- High-melting-point polymer: polyethylene terephthalate (PET) that was dried to a moisture content of 50 ppm by mass or less, and had an intrinsic viscosity (IV) of 0.65 and a melting point of 260°C
- Low-melting-point polymer: copolymerized polyethylene terephthalate (co-PET) that was dried to a moisture content of 50 ppm by mass or less, and had an intrinsic viscosity (IV) of 0.64, an isophthalic acid copolymerization rate of 11% by mole, and a melting point of 230°C

[Example 1]

(Step of Forming Fibers)

The above-described high-melting-point polymer and low-melting-point polymer were melted at temperatures of 295°C and 280°C, respectively. Subsequently, the high-melting-point polymer as a core component and the low-melting-point polymer as a sheath component were spun from discharge holes of a circular spinning spinneret at a spinneret temperature of 295°C and a mass ratio of core: sheath = 80:20, and the resulting fibers were drawn by using an ejector at a spinning speed of 4,900 m/min to obtain composite fibers having a circular cross-section.

(Step of Forming Fiber Webs)

The arrangement of the thus obtained composite fibers was controlled by using a fiber spreading plate, and the composite fibers were subsequently deposited on a moving net conveyer to collect and form fiber webs composed of fibers having an average single-fiber diameter of 15.5 $\mu$m.

(Step of Thermally Bonding Fiber Webs)

The thus collected fiber webs were preheated with a metal flat roll MFC1 provided on the net conveyer at a temperature of 135°C and a linear pressure of 45 N/cm. Subsequently, using a calendar roll MFC2 consisting of a pair of metal flat rolls, the fiber webs were thermally bonded under the conditions where the flat rolls both had a temperature of 150°C and the linear pressure was 450 N/cm, whereby a long-fiber nonwoven fabric was obtained. The thus obtained long-fiber nonwoven fabric had a basis weight of 55 g/m$^2$, a thickness of 0.13 mm, a density of 0.42 g/cm$^3$, a longitudinal-direction tear strength of 59 N, a cross-direction tear strength of 78 N, a longitudinal-direction tensile elongation of 27%, a cross-direction tensile elongation of 20%, and a cross-sectional porosity of 45%. Further, the sewing workability was evaluated as A. The results are shown in Table 1.

[Example 2]

A long-fiber nonwoven fabric was obtained in the same manner as in Example 1, except that: in the step of forming fiber webs, the basis weight of the resulting long-fiber nonwoven fabric was changed from 55 g/m$^2$ to 90 g/m$^2$ by changing the speed of the moving net conveyer; and, in the step of thermally bonding the fiber webs, the temperature of the metal flat roll MFC1 used for preheating was changed from 135°C to 140°C, and the temperature of the calender roll MFC2 used for thermal bonding was changed from 150°C to 170°C. The thus obtained long-fiber nonwoven fabric had a thickness of 0.15 mm, a density of 0.60 g/cm$^3$, a longitudinal-direction tear strength of 72 N, a cross-direction tear strength of 94 N, a longitudinal-direction tensile elongation of 28%, a cross-direction tensile elongation of 23%, and a cross-sectional porosity of 60%. Further, the sewing workability was evaluated as A. The results are shown in Table 1.

[Example 3]

A long-fiber nonwoven fabric was obtained in the same manner as in Example 1, except that: in the step of forming fibers, the average single-fiber diameter of the resulting fibers was changed from 15.5 $\mu$m to 10.6 $\mu$m by changing the amount of the molten polymers spun from the discharge holes of the circular spinning spinneret; in the step of forming fiber webs, the basis weight of the resulting long-fiber nonwoven fabric was changed from 55 g/m$^2$ to 35 g/m$^2$ by changing the speed of the moving net conveyer; and, in the step of thermally bonding the fiber webs, the temperature of the metal flat roll MFC1 used for preheating was changed from 135°C to 130°C, and the temperature of the calender roll MFC2 used for thermal bonding was changed from 150°C to 175°C. The thus obtained long-fiber nonwoven fabric had a thickness of 0.06 mm, a density of 0.58 g/cm$^3$, a longitudinal-direction tear strength of 32 N, a cross-direction tear strength of 50 N, a longitudinal-direction tensile elongation of 23%, a cross-direction tensile elongation of 20%, and a cross-sectional porosity of 75%. Further, the sewing workability was evaluated as A. The results are shown in Table 1.

[Example 4]

A long-fiber nonwoven fabric was obtained in the same manner as in Example 1, except that: in the step of forming fibers, the average single-fiber diameter of the resulting fibers was changed from 15.5 $\mu$m to 16.7 $\mu$m by changing the amount of the molten polymers spun from the discharge holes of the circular spinning spinneret; and, in the step of thermally bonding the fiber webs, the temperature of the calender roll MFC2 used for thermal bonding was changed from 150°C to 165°C. The thus obtained long-fiber nonwoven fabric had a basis weight of 55 g/m$^2$, a thickness of 0.16 mm, a density of 0.34 g/cm$^3$, a longitudinal-direction tear strength of 75 N, a cross-direction tear strength of 110 N, a longitudinal-direction tensile elongation of 30%, a cross-direction tensile elongation of 22%, and a cross-sectional porosity of 38%.

Further, the sewing workability was evaluated as A. The results are shown in Table 1.

[Example 5]

A long-fiber nonwoven fabric was obtained in the same manner as in Example 1, except that: in the step of forming fibers, the mass ratio of the core component composed of the high-melting-point polymer and the sheath component composed of the low-melting-point polymer (core: sheath) was changed from 80:20 to 70:30, the average single-fiber diameter of the resulting fibers was changed from 15.5 $\mu$m to 11.2 $\mu$m by changing the amount of the molten polymers spun from the discharge holes of the circular spinning spinneret, and the spinning speed was changed from 4,900 m/min to 4,100 m/min; in the step of forming fiber webs, the basis weight of the resulting long-fiber nonwoven fabric was changed from 55 g/m$^2$ to 40 g/m$^2$ by changing the speed of the moving net conveyer; and, in the step of thermally bonding the fiber webs, the temperature of the calender roll MFC2 consisting of a pair of metal flat rolls used for thermal bonding was changed from 150°C to 160°C. The thus obtained long-fiber nonwoven fabric had a thickness of 0.10 mm, a density of 0.40 g/cm$^3$, a longitudinal-direction tear strength of 48 N, a cross-direction tear strength of 65 N, a longitudinal-direction tensile elongation of 25%, a cross-direction tensile elongation of 18%, and a cross-sectional porosity of 52%. Further, the sewing workability was evaluated as A. The results are shown in Table 1.

[Example 6]

A long-fiber nonwoven fabric was obtained in the same manner as in Example 1, except that: in the step of forming fibers, the average single-fiber diameter of the resulting fibers was changed from 15.5 $\mu$m to 11.9 $\mu$m by changing the amount of the molten polymers spun from the discharge holes of the circular spinning spinneret; in the step of forming fiber webs, the basis weight of the resulting long-fiber nonwoven fabric was changed from 55 g/m$^2$ to 15 g/m$^2$ by changing the speed of the moving net conveyer; and, in the step of thermally bonding the fiber webs, the temperature of the metal flat roll MFC1 used for preheating was changed from 135°C to 155°C, and the temperature of the calender roll MFC2 used for thermal bonding was changed from 150°C to 185°C. The thus obtained long-fiber nonwoven fabric had a thickness of 0.04 mm, a density of 0.38 g/cm$^3$, a longitudinal-direction tear strength of 12 N, a cross-direction tear strength of 21 N, a longitudinal-direction tensile elongation of 17%, a cross-direction tensile elongation of 16%, and a cross-sectional porosity of 30%. Further, the sewing workability was evaluated as A. The results are shown in Table 1.

[Example 7]

A long-fiber nonwoven fabric was obtained in the same manner as in Example 1, except that: in the step of forming fibers, the average single-fiber diameter of the resulting fibers was changed from 15.5 $\mu$m to 11.9 $\mu$m by changing the amount of the molten polymers spun from the discharge holes of the circular spinning spinneret; in the step of forming fiber webs, the basis weight of the resulting long-fiber nonwoven fabric was changed from 55 g/m$^2$ to 110 g/m$^2$ by changing the speed of the moving net conveyer; and, in the step of thermally bonding the fiber webs, the temperature of the metal flat roll MFC1 used for preheating was changed from 135°C to 115°C, and the temperature of the calender roll MFC2 used for thermal bonding was changed from 150°C to 185°C. The thus obtained long-fiber nonwoven fabric had a thickness of 0.21 mm, a density of 0.52 g/cm$^3$, a longitudinal-direction tear strength of 73 N, a cross-direction tear strength of 125 N, a longitudinal-direction tensile elongation of 33%, a cross-direction tensile elongation of 30%, and a cross-sectional porosity of 55%. Further, the sewing workability was evaluated as A. The results are shown in Table 1.

[Example 8]

A long-fiber nonwoven fabric was obtained in the same manner as in Example 1, except that: in the step of forming fibers, the average single-fiber diameter of the resulting fibers was changed from 15.5 $\mu$m to 10.6 $\mu$m by changing the amount of the molten polymers spun from the discharge holes of the circular spinning spinneret; in the step of forming fiber webs, the basis weight of the resulting long-fiber nonwoven fabric was changed from 55 g/m$^2$ to 37 g/m$^2$ by changing the speed of the moving net conveyer; and, in the step of thermally bonding the fiber webs, the temperature of the calender roll MFC2 used for thermal bonding was changed from 150°C to 132°C. The thus obtained long-fiber nonwoven fabric had a thickness of 0.16 mm, a density of 0.23 g/cm$^3$, a longitudinal-direction tear strength of 35 N, a cross-direction tear strength of 48 N, a longitudinal-direction tensile elongation of 5%, a cross-direction tensile elongation of 10%, and a cross-sectional porosity of 79%. Further, the sewing workability was evaluated as A. The results are shown in Table 1.

[Comparative Example 1]

A long-fiber nonwoven fabric was obtained in the same manner as in Example 1, except that: in the step of forming fibers, the average single-fiber diameter of the resulting fibers was changed from 15.5 $\mu$m to 12.0 $\mu$m by changing the amount of the molten polymers spun from the discharge holes of the circular spinning spinneret; in the step of forming fiber webs, the basis weight of the resulting long-fiber nonwoven fabric was changed from 55 g/m$^2$ to 50 g/m$^2$ by changing the speed of the moving net conveyer; and, in the step of thermally bonding the fiber webs, the temperature of the metal flat roll MFC1 used for preheating was changed from 135°C to 155°C, and the temperature of the calender roll MFC2 used for thermal bonding was changed from 150°C to 185°C. The thus obtained long-fiber nonwoven fabric had a thickness of 0.08 mm, a density of 0.63 g/cm$^3$, a longitudinal-direction tear strength of 30 N, a cross-direction tear strength of 40 N, a longitudinal-direction tensile elongation of 15%, a cross-direction tensile elongation of 17%, and a cross-sectional porosity of 95%. Further, the sewing workability was evaluated as D. The results are shown in Table 1.

[Comparative Example 2]

A long-fiber nonwoven fabric was obtained in the same manner as in Example 1, except that: in the step of forming fiber webs, the basis weight of the resulting long-fiber nonwoven fabric was changed from 55 g/m$^2$ to 110 g/m$^2$ by changing the speed of the moving net conveyer; and, in the step of thermally bonding the fiber webs, preheating was not performed, the temperature of the calender roll MFC2 consisting of a pair of metal flat rolls used for thermal bonding was changed such that the temperature of the upper flat roll and that of the lower flat roll, which were both 150°C, were changed to 200°C and 170°C, respectively, and the linear pressure was changed from 450 N/cm to 490 N/cm. The thus obtained long-fiber nonwoven fabric had a thickness of 0.21 mm, a density of 0.52 g/cm$^3$, a longitudinal-direction tear strength of 150 N, a cross-direction tear strength of 204 N, a longitudinal-direction tensile elongation of 23%, a cross-direction tensile elongation of 12%, and a cross-sectional porosity of 85%. Further, the sewing workability was evaluated as B. The results are shown in Table 1.

[Comparative Example 3]

A long-fiber nonwoven fabric was obtained in the same manner as in Example 1, except that: in the step of forming fibers, the average single-fiber diameter of the resulting fibers was changed from 15.5 $\mu$m to 9.7 $\mu$m by changing the amount of the molten polymers spun from the discharge holes of the circular spinning spinneret; in the step of forming fiber webs, the basis weight of the resulting long-fiber nonwoven fabric was changed from 55 g/m$^2$ to 80 g/m$^2$ by changing the speed of the moving net conveyer; and, in the step of thermally bonding the fiber webs, preheating was not performed, the temperature of the calender roll MFC2 consisting of a pair of metal flat rolls used for thermal bonding was changed such that the temperature of the upper flat roll and that of the lower flat roll, which were both 150°C, were changed to 190°C and 180°C, respectively, and the linear pressure was changed from 450 N/cm to 580 N/cm. The thus obtained long-fiber nonwoven fabric had a thickness of 0.10 mm, a density of 0.80 g/cm$^3$, a longitudinal-direction tear strength of 4 N, a cross-direction tear strength of 25 N, a longitudinal-direction tensile elongation of 35%, a cross-direction tensile elongation of 25%, and a cross-sectional porosity of 14%. Further, the sewing workability was evaluated as D. The results are shown in Table 1.

[Comparative Example 4]

A long-fiber nonwoven fabric was obtained in the same manner as in Example 1, except that: in the step of forming fibers, the average single-fiber diameter of the resulting fibers was changed from 15.5 $\mu$m to 16.1 $\mu$m by changing the amount of the molten polymers spun from the discharge holes of the circular spinning spinneret, the spinning speed was changed from 4,900 m/min to 4,300 m/min, and the basis weight of the resulting long-fiber nonwoven fabric was changed from 55 g/m$^2$ to 200 g/m$^2$ by changing and the speed of the moving net conveyer; and, in the step of thermally bonding the fiber webs, a hot air having a temperature of 250°C was passed through the collected fiber webs, and the fiber webs were then thermally bonded using the calender roll MFC2 consisting of a pair of flat rolls both having a temperature of 180°C at a linear pressure of 490 N/cm. The thus obtained long-fiber nonwoven fabric had a thickness of 1.4 mm, a density of 0.14 g/cm$^3$, a longitudinal-direction tear strength of 69 N, a cross-direction tear strength of 88 N, a longitudinal-direction tensile elongation of 35%, a cross-direction tensile elongation of 39%, and a cross-sectional porosity of 81%. Further, the sewing workability was evaluated as B. The results are shown in Table 1.

[Table 1]

| | | | Example 1 | Example 2 | Example 3 | Example 4 | Example 5 | Example 6 | Example 7 | Example 8 | Comparative Example 1 | Comparative Example 2 | Comparative Example 3 | Comparative Example 4 |
|---|---|---|---|---|---|---|---|---|---|---|---|---|---|---|
| Fiber | High-melting-point Polymer (Core Component) | Polymer Note 1) | PET | PET | PET | PET | PET | PET | PET | PET | PET | PET | PET | PET |
| | | Melting Point [°C] | 260 | 260 | 260 | 260 | 260 | 260 | 260 | 260 | 260 | 260 | 260 | 260 |
| | | Melting Temperature [°C] | 295 | 295 | 295 | 295 | 295 | 295 | 295 | 295 | 295 | 295 | 295 | 295 |
| | Low-melting-point Polymer (Sheath Component) | Polymer Note 2) | co-PET | co-PET | co-PET | co-PET | co-PET | co-PET | co-PET | co-PET | co-PET | co-PET | co-PET | co-PET |
| | | Melting Point [°C] | 230 | 230 | 230 | 230 | 230 | 230 | 230 | 230 | 230 | 230 | 230 | 230 |
| | | Melting Temperature [°C] | 280 | 280 | 280 | 280 | 280 | 280 | 280 | 280 | 280 | 280 | 280 | 280 |
| | Mass Ratio of Core-Sheath [Core: Sheath] | | 80:20 | 80:20 | 80:20 | 80:20 | 70:30 | 80:20 | 80:20 | 80:20 | 80:20 | 80:20 | 80:20 | 80:20 |
| | Spinneret Temperature [°C] | | 295 | 295 | 295 | 295 | 295 | 295 | 295 | 295 | 295 | 295 | 295 | 295 |
| | Spinning Speed [m/min] | | 4900 | 4900 | 4900 | 4900 | 4100 | 4900 | 4900 | 4900 | 4900 | 4900 | 4900 | 4300 |
| | Cross-section Shape | | Circle | Circle | Circle | Circle | Circle | Circle | Circle | Circle | Circle | Circle | Circle | Circle |
| | Average Single Filament Diameter [μm] | | 15.5 | 15.5 | 10.6 | 16.7 | 11.2 | 11.9 | 11.9 | 10.6 | 12.0 | 15.5 | 9.7 | 16.1 |
| Thermal Adhesion | Preheating | Preheating Means Note 3) | MFC1 | MFC1 | MFC1 | MFC1 | MFC1 | MFC1 | MFC1 | MFC1 | MFC1 | - | - | Hot Air |
| | | Temperature [°C] | 135 | 140 | 130 | 135 | 135 | 155 | 115 | 135 | 155 | - | - | 250 |
| | | Linear Pressure [N/cm] | 45 | 45 | 45 | 45 | 45 | 45 | 45 | 45 | 45 | - | - | - |
| | Thermal Adhesion | Thermal Adhesion Means Note 4) | MFC2 | MFC2 | MFC2 | MFC2 | MFC2 | MFC2 | MFC2 | MFC2 | MFC2 | MFC2 | MFC2 | MFC2 |
| | | Temperature [°C] Note 5) | 150 | 170 | 175 | 165 | 160 | 185 | 185 | 132 | 185 | 200/ 170 | 190/ 180 | 180 |
| | | Linear Pressure [N/cm] | 450 | 450 | 450 | 450 | 450 | 450 | 450 | 450 | 450 | 490 | 580 | 490 |

(continued)

| Long-fiber Nonwoven Fabric | | | Example 1 | Example 2 | Example 3 | Example 4 | Example 5 | Example 6 | Example 7 | Example 8 | Comparative Example 1 | Comparative Example 2 | Comparative Example 3 | Comparative Example 4 |
|---|---|---|---|---|---|---|---|---|---|---|---|---|---|---|
| | Basis Weight [g/m$^2$] | | 55 | 90 | 35 | 55 | 40 | 15 | 110 | 37 | 50 | 110 | 80 | 200 |
| | Thickness [mm] | | 0.13 | 0.15 | 0.06 | 0.16 | 0.10 | 0.04 | 0.21 | 0.16 | 0.08 | 0.21 | 0.10 | 1.40 |
| | Density [g/cm$^3$] | | 0.42 | 0.60 | 0.58 | 0.34 | 0.40 | 0.38 | 0.52 | 0.23 | 0.63 | 0.52 | 0.80 | 0.14 |
| | Cross-sectional Porosity [%] | | 45 | 60 | 75 | 38 | 52 | 30 | 55 | 79 | 95 | 85 | 14 | 81 |
| | Tear Strength | Longitudinal-direction [N] | 59 | 72 | 32 | 75 | 48 | 12 | 73 | 35 | 30 | 150 | 4 | 69 |
| | | Cross-direction [N] | 78 | 94 | 50 | 110 | 65 | 21 | 125 | 48 | 40 | 204 | 25 | 88 |
| | Tensile Elongation | Longitudinal-direction [%] | 27 | 28 | 23 | 30 | 25 | 17 | 33 | 5 | 15 | 23 | 35 | 35 |
| | | Cross-direction [%] | 20 | 23 | 20 | 22 | 18 | 16 | 30 | 10 | 17 | 12 | 25 | 39 |
| | Sewing Workablity | | A | A | A | A | A | A | A | A | D | B | D | B |

Note 1) PET: Polyethyleneterephthalate. Note 2) co-PET: Co-polymerized Polyethyleneterephthalate. Note 3) MFC1: Metal Flat Roll.

Note 4) MFC2 : Calender Roll consinting of Metal Flat Roll.

Note 5) "200/170" in Comparative Example 2: Upper Flat Roll Temperature=200°C, Lower Flat Roll Temperature=170°C; "190/180" in Comparative Example 3: Upper Flat Roll temperature=190°C, Lower Flat roll Temperature=180°C.

EP 4 567 177 A1

16

The properties of the above-obtained nonwoven fabrics were as shown in Table 1. The long-fiber nonwoven fabrics of Examples 1 to 4 all had an average single-fiber diameter of 10.0 $\mu$m to 20.0 $\mu$m and a cross-sectional porosity of 30% to 80%, and thus exhibited a tear strength of 30 N to 120 N and a tensile elongation of 10% to 40% in both the longitudinal direction and the cross direction; therefore, these long-fiber nonwoven fabrics presented no problem in the sewing workability, and all demonstrated the properties of a long-fiber nonwoven fabric having both an appropriate density and a sufficient mechanical strength. Further, although the long-fiber nonwoven fabric of Example 6 had a low basis weight and a low tear strength, it had an average single-fiber diameter of 10.0 $\mu$m to 20.0 $\mu$m and a cross-sectional porosity of 30% to 80%, presenting no problem in the sewing workability; although the long-fiber nonwoven fabric of Example 7 had a high basis weight and a high tear strength, it had an average single-fiber diameter of 10.0 $\mu$m to 20.0 $\mu$m and a cross-sectional porosity of 30% to 80%, presenting no problem in the sewing workability; and, although the long-fiber nonwoven fabric of Example 8 exhibited a low tensile elongation, it had an average single-fiber diameter of 10.0 $\mu$m to 20.0 $\mu$m and a cross-sectional porosity of 30% to 80%, presenting no problem in the sewing workability. Therefore, the long-fiber nonwoven fabrics of Examples 6 to 8 all demonstrated the properties of a long-fiber nonwoven fabric maintaining an appropriate density. On the other hand, in Comparative Examples 1 and 3, the long-fiber nonwoven fabrics were hard sheets and had poor mechanical strength. In Comparative Examples 2 and 4, the nonwoven fabrics were inferior since they were thick and had many fluffs.

Industrial Applicability

The long-fiber nonwoven fabric of the present invention not only has excellent flexibility that allows the nonwoven fabric to conform to the device shape of an airbag storage member, but also exhibits excellent mechanical strength that prevents breakage or tearing of the nonwoven fabric upon contact with the airbag storage member; therefore, the long-fiber nonwoven fabric of the present invention can be utilized as an airbag package material.

## Claims

1. A long-fiber nonwoven fabric, comprising fibers containing a thermoplastic resin as a main component, wherein

   the fibers have an average single-fiber diameter of 10.0 $\mu$m to 20.0 $\mu$m, and
   the long-fiber nonwoven fabric has a cross-sectional porosity of 30% to 80%.

2. The long-fiber nonwoven fabric according to claim 1, wherein the fibers are composite fibers in which a low-melting-point polymer having a melting point lower than that of a high-melting-point polymer is arranged around the high-melting-point polymer.

3. The long-fiber nonwoven fabric according to claim 1 or 2, having a basis weight of 20 g/m$^2$ to 100 g/m$^2$.

4. The long-fiber nonwoven fabric according to claim 1 or 2, having a tear strength of 30 N to 120 N in both a longitudinal direction and a cross direction, and a tensile elongation of 10% to 40% in both the longitudinal direction and the cross direction.

5. An airbag package, comprising the long-fiber nonwoven fabric according to claim 1 or 2.

6. A method of producing the long-fiber nonwoven fabric according to claim 1, the method comprising sequentially performing the following steps (a) to (c):

   (a) the step of melt-extruding a thermoplastic resin from a spinning spinneret, and drawing and stretching the thus spun thermoplastic resin by using an ejector to form fibers;
   (b) the step of controlling the arrangement of the fibers by using a fiber spreading plate, and depositing the fibers on a moving net conveyer to form fiber webs; and
   (c) the step of preheating and then thermally bonding the thus obtained fiber webs.

## INTERNATIONAL SEARCH REPORT

| International application No. |
| --- |
| **PCT/JP2023/018069** |

| A. | CLASSIFICATION OF SUBJECT MATTER |
| --- | --- |

*D04H 3/018*(2012.01)i; *D04H 3/147*(2012.01)i; *B60R 21/235*(2006.01)i
FI:  D04H3/018; D04H3/147; B60R21/235

According to International Patent Classification (IPC) or to both national classification and IPC

| B. | FIELDS SEARCHED |
| --- | --- |

Minimum documentation searched (classification system followed by classification symbols)

D04H1/00-18/02; B60R21/235

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

JSTPlus/JMEDPlus/JST7580 (JDreamIII)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | JP 2005-001622 A (TORAY IND., INC.) 06 January 2005 (2005-01-06) | 1-6 |
| A | JP 2009-167566 A (KURASHIKI SENI KAKO KK) 30 July 2009 (2009-07-30) | 1-6 |
| A | JP 03-076858 A (ASAHI CHEM. IND. CO., LTD.) 02 April 1991 (1991-04-02) | 1-6 |
| A | JP 2007-284859 A (TORAY IND., INC.) 01 November 2007 (2007-11-01) | 1-6 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **11 July 2023** | **25 July 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2023/018069**

| Patent document cited in search report | Publication date (day/month/year) | Patent family member(s) | Publication date (day/month/year) |
|---|---|---|---|
| JP 2005-001622 A | 06 January 2005 | (Family: none) | |
| JP 2009-167566 A | 30 July 2009 | (Family: none) | |
| JP 03-076858 A | 02 April 1991 | (Family: none) | |
| JP 2007-284859 A | 01 November 2007 | (Family: none) | |

Form PCT/ISA/210 (patent family annex) (January 2015)

**EP 4 567 177 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2005001622 A
- JP 2003306118 A